# EUROPÄISCHE PATENTSCHRIFT

(11) **EP 3 572 802 B1**
(45) Veröffentlichungstag und Bekanntmachung des Hinweises auf die Patenterteilung: **21.06.2023**
(21) Anmeldenummer: 19174368.1
(22) Anmeldetag: 14.05.2019
(51) Int. Cl.: G01N 21/88, G01N 21/896, G01N 21/958

(54) **VERFAHREN ZUR DETEKTION VON DISKONTINUITÄTEN IN EINEM LICHTDURCHLÄSSIGEN WERKSTÜCK**
METHOD FOR DETECTING DISCONTINUITIES IN A TRANSLUCENT ARTICLE
PROCÉDÉ DE DÉTECTION DES DISCONTINUITÉS DANS UNE PIÈCE TRANSLUCIDE

(30) Priorität: 24.05.2018 AT 504262018
(43) Veröffentlichungstag der Anmeldung: 27.11.2019
(73) Patentinhaber: EYYES GmbH, 3494 Gedersdorf (AT)
(72) Erfinder: Traxler, Johannes, 3500 Imbach (AT)
(74) Vertreter: Burgstaller, Peter

(56) Entgegenhaltungen:
- DE-A1-102004 034 167
- DE-A1-102015 223 853
- JP-A- 2014 163 694
- JP-A- 2017 166 903
- US-A1- 2012 044 344

## Beschreibung

Die hier offenbarte Erfindung betrifft ein Verfahren gemäß Oberbegriff des Anspruches 1.

Ein Werkstück hat definitionsgemäß lichtdurchlässige Werkstückeigenschaften, wenn zumindest eine Teilmenge von Lichtwellen mit einer Lichtwelle von 300nm bis 900nm durch einer auf die Oberfläche des Werkstücks abgegebenen Lichtmenge durch das Werkstück transmittiert wird.

Eine geometrische Diskontinuität in einem lichtdurchlässigen Werkstück kann beispielsweise ein Kratzer in einer Abdeckung eines Scheinwerfers oder eine Beschädigung der Glasfläche eines Photovoltaikelementes sein. Eine geometrische Diskontinuität kann weiters eine Teilfläche sein, welche Teilfläche durch ihre Teiloberflächenausbildung wie beispielsweise unebene Teiloberflächenausbildung von der übrigen Oberfläche unterscheidet.

Die oben beschriebenen Effekte sind nach dem Stand der Technik bekannt und durch die gängige Lehre belegt. Die Teilmengen der Lichtstrahlen können über die Erstreckung des zu untersuchenden Körpers aufgrund der unterschiedlichen optischen Eigenschaften variieren und so unterschiedlich helle Teilbereiche am zu untersuchenden Werkstück hervorrufen, sodass geometrische Diskontinuitäten über diese unterschiedlich hellen Teilbereiche an der Werkstückoberfläche und/oder im Werkstückkörper detektiert werden können.

In US5237404 wird vorgeschlagen, ein Reflexionsmuster eines Teilbereiches eines Körpers mit einem weiteren Reflexionsmuster eines weiteren Teilbereiches eines Körpers zu vergleichen. Es findet sich in diesem Dokument kein Hinweis auf die Verwendung einer Hyperspektralkamera.

US5293538 schlägt die Umwandlung des reflektierten Lichtes in ein erstes Bildsignal und des verstreuten Lichtes in ein zweites Bildsignal vor, wobei die Bildsignale verglichen werden.

Es findet sich in US 5,963,328 auch kein Hinweis zur Aufnahme der reflektierten Lichtstrahlen mittels einer Hyperspektralkamera.

US4629319 offenbart das Beleuchten eines Werkstückes mit Licht und das Detektieren von hellen und dunkeln Teilbereichen. Das Werkstück muss nicht zwingend aus einem lichtdurchlässigen Material hergestellt sein.

Es findet sich in US 2007/0057184 A1 auch kein Hinweis auf die Verwendung einer Hyperspektralkamera, um bei dem in diesem Dokument beschriebenen Verfahren Diskontinuitäten zu detektieren.

US 6,617,136 B2 schlägt Richten von Lichtstrahlen in einem spitzen Winkel auf die Oberfläche des Werkstückes vor.

Das in US5426506 offenbarte Verfahren basiert auf der Verwendung von Laserlicht.

US3814946 offenbart ein Verfahren zur Detektion von Diskontinuitäten mittels eines ersten und eines zweiten Lichtstrahles.

DE 10 2015 223853 A1 und JP201813457 offenbaren die Verwendung einer Hyperspektralkamera und nicht die Aufnahme von monochromatischem Licht mittels einer optischen Kamera.

US 2012/0044344 A1 und JP 2014 163694 A erwähnen die Aufnahme von monochromatischem Licht mit einer optischen Kamera. Diese Dokumente liefern jedoch keinen Hinweis auf die Verwendung eines Streulichtringes zur Erzeugung des monochromatischen Lichtes.

JP 2017 166903 A offenbart ein Verfahren zur Inspektion von Testobjekten, bei dem von einem Testobjekt reflektiertes und durch das Testobjekt transmittiertes Licht jeweils mittels einer Kamera aufgenommen werden.

DE 10 2004 034167 A1 offenbart Verfahren zur Untersuchung optischer Oberflächeneigenschaften von Werkstücken mittels der Aufnahme von an einem Werkstück reflektierten Licht, wobei auch Messungen im Durchlichtverfahren möglich sind. Dabei sind einzelne Lichtquellen zur Beleuchtung des Werkstücks auf einem Kreisbogen angeordnet, und am Werkstück reflektiertes Licht wird von einer Kamera aufgenommen.

US 2012/0044344 A1 offenbart ein Verfahren zur Erkennung von Defekten eines transparenten Substrats mittels Reflexions- und Transmissionsmessungen.

Das erfindungsgemäße Verfahren stellt sich die Aufgabe, ein zuverlässiges und einfach durchzuführendes Verfahren zur Detektion von Diskontinuitäten in einem lichtdurchlässigen Werkstück bereitzustellen. Die durch Anwendung des erfindungsgemäßen Verfahrens zu detektierenden Diskontinuitäten können in einer Oberflächenschicht des Werkstückes oder im Körper des Werkstückes angeordnet sein. Eine Oberflächenschicht kann hierbei eine Schicht durch den lichtdurchlässigen Körper selbst oder durch eine auf die Oberfläche aufgebrachte Schicht wie eine Lackschicht oder eine Folie oder eine Adhäsionsschicht sein. Ein Werkstück wird im Rahmen der Offenbarung dieser Erfindung als lichtdurchlässig angesehen, wenn zumindest eine Teilmenge der auf die Werkstückoberfläche gerichteten Lichtstrahlen durch das Werkstück transmittiert wird. Das Werkstück kann beispielsweise ein Kunststoff oder ein Glas sein. Erfindungsgemäß wird dies durch die Durchführung eines Verfahrens gemäß Anspruch 1 erreicht.

Zu der Aufnahme von reflektierten Lichtstrahlen ist die Verwendung eines Streulichtbogens vorgesehen, um so eine linienkonforme Reflexion zu gewährleisten. Die Verwendung eines Streulichtes ist gemäß der vorliegenden Erfindung bei der Untersuchung von Werkstücken mit einer gekrümmten und/oder polygonal ausgeformten Oberfläche vorgesehen, da hierdurch im Wesentlichen eine Reflexion der Lichtstrahlen an der gesamten Oberfläche des Körpers gewährleistet ist.

Durch das Verfahren gemäß Anspruch 1 kann auch erreicht werden, dass eine farbgesättigte Ausleuchtung der zu überprüfenden, gekrümmten Oberfläche gewährleistet wird. Bei einer konkav gekrümmten Oberfläche sieht die vorliegende Erfindung einen ähnlich konkav ausgeformten Streulichtbogen vor. Bei einer konvex gekrümmten Oberfläche sieht die vorliegende Erfindung einen ähnlich konvex ausgeformten Streulichtbogen vor.

Erfindungsgemäß ist vorgesehen, dass der Streulichtbogen eine zu der Form der Oberfläche ähnliche Form aufweist. Weist die zu untersuchende Oberfläche eine Bogenform auf, so weist die Streulichtquelle eine dieser entsprechende Bogenform auf.

Die positiven Effekte, welche durch die Anwendung des erfindungsgemäßen Verfahrens erzielbar sind, sind durch eine genauere Detektion der geometrischen Diskontinuitäten begründet. In der nachstehenden Figurenbeschreibung werden diese positiven Effekte anhand von Figuren beschrieben.

Die Aufnahme der transmittierten Lichtstrahlen (Durchlichtverfahren) erfolgt in vorteilhafter Weise unter Abschattung, um so mögliche Störeinflüsse auf die Aufnahme der transmittierten Lichtstrahlen zu minimieren.

Der Fachmann wählt die Eigenschaften der monochromatischen Lichtstrahlen in Abhängigkeit der Eigenschaft der optischen Kamera und/oder der Eigenschaften des Werkstückes unter Anwendung der gängigen Lehre und/oder seiner Erfahrung. Der Fachmann kann auch den Effekt von unterschiedlichen Eigenschaften der monochromatischen Lichtstrahlen an dem eine Diskontinuität umfassenden Werkstück erproben und dem entsprechend die Eigenschaft der monochromatischen Lichtstrahlen zur Durchführung des erfindungsgemäßen Verfahrens wählen.

Erfindungsgemäß wird die Aufnahme der transmittierten, monochromatischen Lichtstrahlen mit der Aufnahme von reflektierten Lichtstrahlen mittels einer Hyperspektralkamera kombiniert.

Der Fachmann wählt die Eigenschaften und die Funktionen der Hyperspektralkamera in Abhängigkeit der Eigenschaft der Lichtquelle und/oder der Eigenschaften des Werkstückes unter Anwendung der gängigen Lehre und/oder seiner Erfahrung.

Bei einer ausschließlichen Aufnahme der reflektierten Lichtstrahlen sind Diskontinuitäten in nicht gekrümmten, im Wesentlichen ebenen Teilflächen gut erkennbar. Die Detektion der Diskontinuitäten ist anhand von hellen Teilbereichen und dunklen Teilbereichen gut möglich, wobei die hellen Teilbereiche die Diskontinuitäten im Werkstück anzeigen.

Bei einer gekrümmten Form des Werkstückes und/oder bei einer gekrümmten Oberfläche des Werkstückes kann bei einer ausschließlichen Aufnahme der reflektierten Lichtstrahlen nicht mehr eindeutig und klar zwischen einer durch eine Diskontinuität hervorgerufenen geänderten Reflexion von Lichtstrahlen und einer durch die gekrümmte Oberfläche bedingten geänderten Reflexion von Lichtstrahlen unterschieden werden. In beiden Fällen werden helle Teilbereiche angezeigt. Eine als ein heller Teilbereich angezeigte Krümmung der Oberfläche kann so eine ebenso als ein heller Teilbereich angezeigte Diskontinuität überdecken und sohin unerkenntlich machen.

Das erfindungsgemäße Verfahren kann sich aber auch dadurch auszeichnen, dass die Detektion der Diskontinuitäten durch eine Zusammenschau der Verfahren zur Aufnahme der reflektierten Lichtstrahlen und zur Aufnahme der transmittierten Lichtstrahlen erfolgt. Das erfindungsgemäße Verfahren wird bei dieser Ausformung noch verlässlicher in der Erkennung der Diskontinuitäten als bei der ausschließlichen Aufnahme von transmittierten Lichtstrahlen oder reflektierten Lichtstrahlen.

Das erfindungsgemäße Verfahren ist durch die Zusammenschau der Verfahren nicht mehr darauf beschränkt, dass die Lichtstrahlen in einem bestimmten Winkel auf die Werkstückoberfläche gerichtet sein müssen, wie dies oben anhand des Beispiels der Untersuchung von gekrümmten Oberflächen oder gekrümmten Körpern dargelegt ist.

Bei einer Zusammenschau der Aufnahmeverfahren gemäß der vorliegenden Erfindung werden die Ergebnisse der einzelnen Verfahren miteinander verglichen und ein Grad einer Übereinstimmung unter Anwendung der gängigen Lehre berechnet.

Unterschreitet der Grad der Übereinstimmung einen definierten Grenzwert, so kann im Rahmen des erfindungsgemäßen Verfahrens eine manuelle Kontrolle eines bestimmten Teilbereiches erforderlich sein.

Es können durch die Lichtquelle Lichtstahlen mit weißem Licht emittiert werden. Die Verwendung von weißem Licht hat den Vorteil, dass durch die annähernd gleiche Verteilung über das sichtbare Lichtspektrum eine Verbesserung vor allem bei mikroskopisch kleinen Effekten erzielbar ist. Dieser positive Effekt tritt bei der Emittierung von Lichtstrahlen mit anders farbigem Licht wie beispielsweise von rotem Licht nicht auf.

Das erfindungsgemäße Verfahren kann sich dadurch auszeichnen, dass zur Aufnahme der reflektierten Lichtstrahlen derartige Lichtstrahlen mit einer Wellenlänge eingesetzt werden, bei welcher Wellenlänge die Lichtstrahlen nicht durch das Werkstück transmittiert werden.

Der Fachmann ist in der Lage, die Wellenlänge der Lichtstrahlen zur Durchführung einer ausschließlichen Aufnahme der reflektierten Lichtstrahlen in Abhängigkeit der Materialeigenschaften des Werkstückes so zu wählen, dass keine Lichtstrahlen durch das Werkstück transmittiert werden. Der Anteil der transmittierten Lichtstrahlen und der Anteil der reflektieren Lichtstrahlen ist eine werkstoffabhängige Größe.

Das erfindungsgemäße Verfahren umfasst, dass die Lichtstrahlen unter Verwendung einer Streulichtfläche von der Lichtquelle abgegeben werden.

Vorteilhaft werden die Lichtstrahlen in einem Winkel von 30° bis 60° auf die Werkstückoberfläche gerichtet. Bei einer Versuchsanlage, bei welcher die Lichtstrahlen in einem Winkel von 45° auf die zu untersuchende Oberfläche gerichtet waren, wurden sehr gute Ergebnisse erzielt.

Das erfindungsgemäße Verfahren kann umfassen, dass die Lichtstrahlen unter Einhaltung des oben angegebenen Winkel auf eine Teilfläche der Oberfläche des Körpers gerichtet werden.

Das erfindungsgemäße Verfahren ist geeignet, um die Diskontinuitäten in einer auf der Werkstückoberfläche aufgebrachten Lackschicht zu detektieren.

Weist die Lackschicht eine Ausnehmung auf, so sind hier die Eigenschaften der von der Lackschicht ausgenommenen Werkstückoberfläche bezüglich der reflektierten Lichtstrahlen und/oder der transmittierten Lichtstrahlen entscheidend, während bei einer intakten Lackschicht die Eigenschaften der Lackschichtoberfläche entscheidend sind. Unter der Annahme, dass die Lackschicht und das Werkstück unterschiedliche optische Eigenschaften aufweisen, ist eine Ausnehmung gut detektierbar.

Unter der Annahme, dass eine auf einer Werkstückoberfläche aufgebrachte Adhäsionsschicht andere optische Eigenschaften aufweist als das Werkstück, sind Diskontinuitäten in einer an der Oberfläche eines lichtdurchlässigen Werkstückes aufgebrachten Adhäsionsschicht mittels des erfindungsgemäßen Verfahrens erkennbar.

Das erfindungsgemäße Verfahren ist auch geeignet, um eine Adhäsionsschicht zwischen zwei lichtdurchlässigen Werkstücken auf Diskontinuitäten zu untersuchen.

Das erfindungsgemäße Verfahren ist weiters zur Detektion von Diskontinuitäten in einer an der Oberfläche eines lichtdurchlässigen Werkstückes aufgebrachten lichtdurchlässigen Folie geeignet.

Die Lackschicht und/oder die Adhäsionsschicht und/oder die Folie kann lichtdurchlässige Eigenschaften aufweisen.

Das erfindungsgemäße Verfahren wird weiters durch die nachstehenden Figuren und die nachstehende Figurenbeschreibung erläutert.
- 1: Diskontinuität
- 2: Haar
- 3: Reflexionszone
- 4: Kontrollbild
- 5: Diagramm
- 6: Werkstück
- 7: zu überprüfende Oberfläche
- 8: Kamera
- 9: Lichtquelle
- 10: Rahmen
- 11: Führungseinheit
- 12: Abschirmung
- 13: Ausnehmung
- 14: Relativbewegung
- 15: weitere Lichtquelle

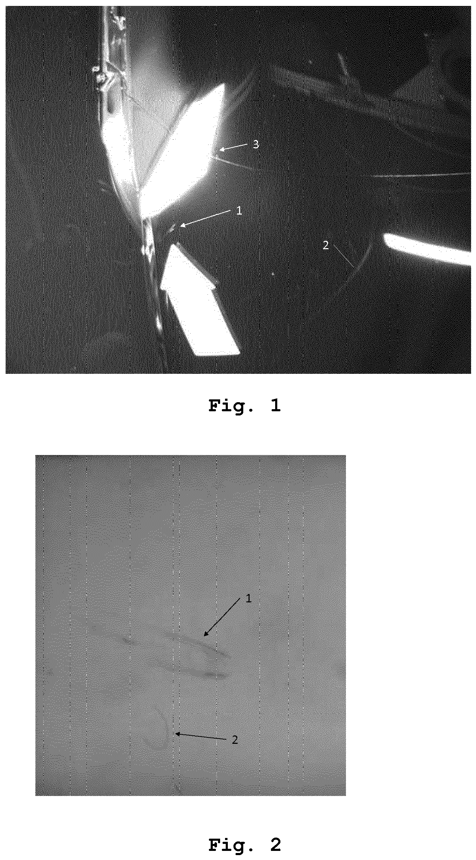

Figur 1 zeigt einen Teilbereich eines aus einem transparenten Kunststoff hergestellten Abdeckung Scheinwerfers, welcher eine Diskontinuität 1 aufweist. Neben der Diskontinuität 1 ist weiters ein Haar 2 als eine Form der Verschmutzung zu erkennen. Der in Figur 1 gezeigte Teilbereich wird mit einer Lichtquelle beleuchtet, wobei ein erster Teilbereich auf die Oberfläche des Teilbereiches emittierten Lichtstrahlen an der Oberfläche des Teilbereiches reflektiert wird. Bei dem in Figur 1 enthaltenen Bild sind die reflektierten Lichtstrahlen aufgenommen.

Das auf die Oberfläche emittierte Licht wird in Abhängigkeit der Form der Oberfläche reflektiert. Es ist eine Reflexionszone 3 ausmachbar, in welcher die Lichtstrahlen in einem hohen Maß reflektiert werden, was in dem Bild in Figur 1 als ein heller Beriech erkennbar ist.

Der Fachmann erkennt, dass weder die Diskontinuität 1 noch das Haar 2 gut erkennbar sind. Die Diskontinuität 1 und das Haar 2 sind im Bild in Figur 1 gleichermaßen als helle Bereiche wahrzunehmen, sodass keine Unterscheidung zwischen diesen möglich ist.

Figur 2 zeigt ein Bild von einem Teilbereich einer aus einem transparenten Kunststoff hergestellten Abdeckung eines Schweinwerfers, welcher Scheinwerfer eine Diskontinuität 1 aufweist. Weiters ist ein Haar 2 als eine Verschmutzung zu erkennen. Der Scheinwerfer wurde wiederum mit einer Lichtquelle beleuchtet, wobei bei dem in Figur 2 gezeigten Bild die transmittierten Lichtstrahlen aufgenommen wurden. Das in Figur 2 enthaltene Bild ist sohin das Ergebnis einer Durchlichtmessung.

Der Fachmann erkennt, dass das in Figur 2 gezeigte Bild schon deutlich besser zu erkennen. Dennoch ist das in Figur 2 gezeigte Bild für eine hinreichend genaue Erkennung der Diskontinuität 1 und des Haares 2 nicht geeignet, da die Kontraste des in Figur 2 gezeigten Bildes nicht hinreichend stark sind. Weiters zeigt das Bild der Figur 2 Flecken, welche Flecken auf eine ungleiche Intensität der Lichtquelle zurückzuführen sind. Es ist auch Aufgabe des erfindungsgemäßen Verfahrens, derartige Flecken als Störfaktoren auszuschließen.

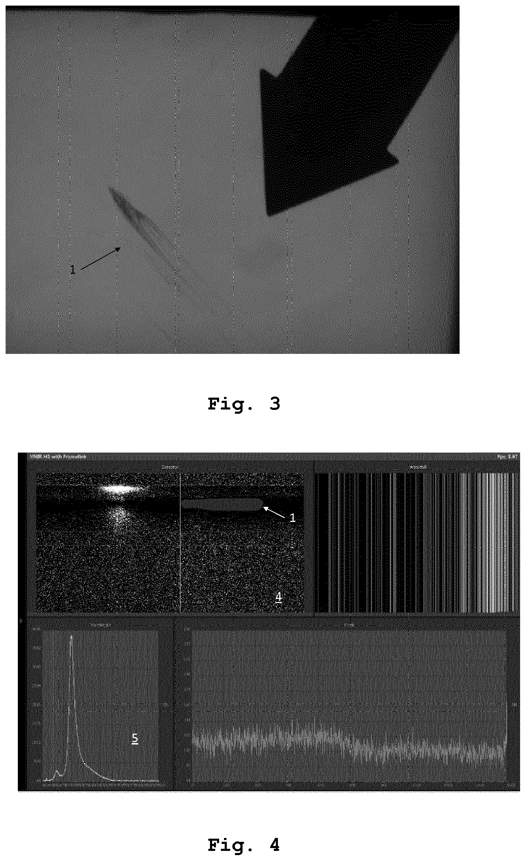

Figur 3 zeigt eine Möglichkeit der Anwendung des erfindungsgemäßen Verfahrens zur Detektion von Diskontinuitäten 1 in einem Werkstück. Das Bild in Figur 3 wurde durch eine Beleuchtung des transparenten Scheinwerfers mit monochromatischen Lichtstrahlen und der Aufnahme der transmittierten Lichtstrahlen erstellt. Diese Messung wird in einem Lichtlabor unter Abschattung erstellt, wobei an einer Seite der Abdeckung des Scheinwerfers eine zur Abgabe von monochromatischem Licht geeignete Lichtquelle und an der gegenüberliegenden Seite des Scheinwerfers eine Kamera nach dem Stand der Technik angeordnet ist. Der Scheinwerfer ist hierzu zwischen der Lichtquelle und der Kamera durch eine geeignete Halterung aufgehängt.

Der Fachmann erkennt, dass die Diskontinuität 1 in dem in Figur 3 enthaltenen Bild sehr deutlich erkennbar ist. Im Unterschied zu dem in Figur 2 gezeigten Bild ist der keine Diskontinuitäten umfassende Teilbereich in einem einheitlichen Farbton dargestellt.

Die Durchlichtmessungen mittels monochromatischem Licht sind vor allem zur Erkennung von Kratzern und/oder Kerben und/oder Vorsprüngen geeignet.

Zur Erkennung von Unebenheiten an der Oberfläche des Teilbereiches der Abdeckung des Scheinwerfers - auch als Orangenhaut bezeichnet - wird die zweite Teilmenge der Lichtstrahlen mittels einer Hyperspektralkamera nach dem Stand der Technik aufgenommen. Figur 4 zeigt ein Bild einer Ausgabeeinheit einer derartigen Hyperspektralkamera, welche Hyperspektralkamera das beleuchtete Werkstück zeilenförmig abtastet.

An der Ausgabeeinheit wird eine Diskontinuität 1 im Kontrollbild 4 in Form eines Bereiches angezeigt. Weiters ist die Diskontinuität 1 anhand des Diagrammes 5 erkennbar, welches den zeilenmäßigen Verlauf (x-Achse) der Menge der reflektierten Strahlen (y-Achse) darstellt. Im Bereich der Diskontinuität ist ein Maximum der reflektierten Strahlen erkennbar.

Es kann sohin sowohl durch eine Durchlichtmessung mittels monochromatischem Licht als auch durch eine Reflexionsmessung unter Verwendung einer Hyperspektralkamera eine Diskontinuität detektiert werden. Es können die Ergebnisse der Messungen miteinander verglichen werden, um so die Genauigkeit des erfindungsgemäßen Verfahrens weiter zu erhöhen.

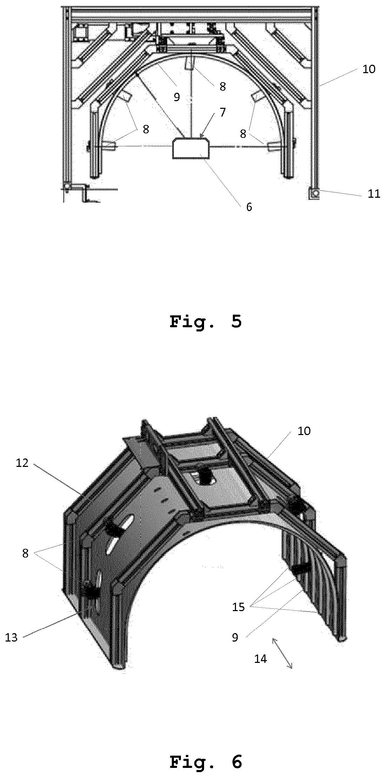

Figur 5 zeigt eine mögliche Anordnung von Lichtquellen und Kameras zur Detektion von Diskontinuitäten in einem lichtdurchlässigen Werkstück 6. Das zu überprüfende Werkstück 6 ist mit der zu überprüfenden, polygonal ausgeformten Oberfläche 7 in Richtung der Kameras 8 angeordnet.

Die in Figur 5 dargestellte Anordnung umfasst eine um das Objekt 7 bogenförmig angeordnete Lichtquelle 9, welche Lichtquelle 9 einen Streulichtbogen ausbildet. Das Objekt 7 kann hierbei wie in Figur 5 dargestellt im Zentrumspunkt des Streuchlichtbogens angeordnet sein. Der Fachmann wählt die Position des Objektes 6 so, dass die zu überprüfende Oberfläche 7 gleichmäßig ausgeleuchtet ist. Die zu überprüfende Oberfläche 7 ist zu der bogenförmig ausgebildeten Lichtquelle 9 hin ausgerichtet.

Figur 5 zeigt insbesondere einen Sonderfall einer Anordnung der Lichtquelle 9 um das Objekt 6. Nachdem bei dem zu untersuchenden Objekt 6 nur die nach oben weisende Oberfläche 7 zu untersuchen ist, erstreckt sich die die Lichtquelle 9 bogenförmig oberhalb der zu untersuchenden Oberfläche 7. Die Figur 5 zeigt eine Leuchtquelle 9 mit einem Bogenmaß von 180°, wobei der Fachmann in der Lage ist in Abhängigkeit der zu untersuchenden Oberfläche 6 ein unterschiedliches Bogenmaß zu wählen.

Die in Figur 5 gezeigte Anordnung umfasst weiters Kameras zur Aufnahme der zu überprüfenden Oberfläche 7. Es sind in dieser Anordnung fünf Kameras 8 vorgesehen, welche Kameras 8 an fünf unterschiedlichen Positionen angeordnet sind. Die Kameras 8 sind an der Bogenform der Lichtquelle 9 in circa gleichmäßigen Abständen und sohin in einem Zentrumswinkel von circa 45 Grad angeordnet. Der Fachmann richtet die Kameras 8 so aus, dass die Kameras 8 die zu untersuchende Oberfläche 7 optimal aufnehmen.

Es sind die Lichtquelle 9 und die Kameras 8 an einem steif ausgebildeten Rahmen 10 angeordnet. Es ist der Rahmen 9 auf einer Führung 11 angeordnet, sodass der Rahmen 9 mitsamt der Lichtquelle 9 und der Kamera 8 relativ zu dem Objekt 6 in einer Bewegungsrichtung normal zu der Bildebene der Figur 6 verschieblich gelagert ist. Der Fachmann erkennt, dass gleichermaßen auch das Objekt 6 auf einer Führung 11 angeordnet sein kann.

Die Anordnung kann weitere parallel zu der Bildebene der Figur 5 angeordnete Lichtquellen 15 umfassen, welche weitere Lichtquellen 15 eine ähnliche und somit zu der in Figur 5 eingetragenen Lichtquelle 9 deckungsgleiche Bogenform aufweisen.

Die Anordnung kann weitere Kameras aufweisen, welche weiteren Kameras in Ebenen parallel zu der Bildebene der Figur 5 und deckungsgleich zu den in Figur 5 eingetragenen Kameras angeordnet sind.

Durch ein Verschieben des Rahmens 9 zu dem Objekt 6 kann das Objekt von mehreren Kamerapunkten aufgenommen werden.

Figur 6 ist eine dreidimensionale Darstellung der in Figur 5 gezeigten Anordnung, wobei der Rahmen 9 aus Gründen der Übersichtlichkeit in Figur 6 nur teilweise dargestellt ist. In Ergänzung zu der obigen Figurenbeschreibung zu Figur 5 wird ausgeführt, dass die Anordnung eine bogenförmige Abschirmung 12 umfasst, welche Abschirmung 12 das Eintreten von Umgebungslicht in den von den Kameras 8 aufgenommenen Raum und das Auftreffen von Umgebungslicht auf das Objekt 6, insbesondere auf die Oberfläche 7 unterbinden soll. Es ist die Abschirmung 12 vom Objekt 6 aus gesehen außerhalb der Lichtquelle 9 angeordnet.

Die Abschirmung 12 umfasst Ausnehmungen 13, durch welche Ausnehmungen 13 die Kameras 8 ragen können. Der Benutzer kann hierdurch die Ausrichtung und die Positionierung der Kameras 8 verändern.

Es ist in Figur 6 das zu untersuchende Objekt nicht eingetragen. Figur 6 umfasst einen Pfeil 14, welcher Pfeil die Relativbewegung zwischen der Anordnung und dem nicht dargestellten Objekt 6 veranschaulicht. Es ist die Form und die Richtung der Relativbewegung 14 durch die in Figur 5 dargestellten Führungen definiert.

Es ist anhand von Figur 6 deutlich zu erkennen, wie weitere Lichtquellen 15 parallel zu der einen bogenförmig ausgebildeten Lichtquelle 9 angeordnet sind. Die weiteren Lichtquellen 15 weisen ebenfalls eine Bogenform auf und sind in dem Schnittbild gemäß Figur 5 deckungsgleich zu der Lichtquelle 9 angeordnet. Die in Figur 5 und Figur 6 gezeigte Anordnung umfasst neun, in zueinander parallelen Ebenen angeordnete, bogenförmig ausgebildete Lichtquellen 9, 15.

Die in Figur 5 und Figur 6 gezeigte Anordnung eignet sich insbesondere für die Überprüfung einer Oberfläche eines Scheinwerfers. Bei einer ersten Versuchsanlage wurde ein Radius von 350,0 Millimeter für die bogenförmige Anordnung der Lichtquelle 9 zu dem Schweinwerfer als das zu untersuchende Objekt 6 gewählt. Der Fachmann erkennt, dass der oben genannte Radius zu dem Objekt so gewählt wird, dass eine Vielzahl von Scheinwerfern mit unterschiedlichen Formen untersucht werden kann.

Durch die bogenförmige Anordnung kann eine farbgesättigte Ausleuchtung der Oberfläche 7 erreicht werden. Die Anordnung kann auch gewährleisten, dass die farbgesättigte Ausleuchtung gezielt an ausgewählten Messpunkten der Oberfläche 7 erreicht wird. Eine Diskontinuität ist durch eine Abweichung der gesättigten Ausleuchtung sichtbar.

Eine Diskontinuität, welche Diskontinuität in einem mit einer Sättigung ausgeleuchteten Bereich angeordnet ist, wird als ein im Vergleich zu dem Umgebungsbereich zu der Diskontinuität hellerer Teilbereich sichtbar.

Eine Diskontinuität, welche Diskontinuität in einem mit einer annähernden Sättigung ausgeleuchteten Bereich angeordnet ist, wird als ein zu dem Umgebungsbereich zu der Diskontinuität dunklerer Teilbereich sichtbar.

## Patentansprüche

1. Verfahren zu einer zerstörungsfreien Detektion von geometrischen Diskontinuitäten (1) in einem lichtdurchlässigen Werkstück (6), welches Werkstück (6) eine gekrümmte und/oder polygonal ausgeformte Oberfläche (7) aufweist.
wobei von zumindest einer Lichtquelle (9) emittierte Lichtstrahlen auf das Werkstück (6) gerichtet werden,
wobei zu einer Aufnahme von reflektierten Lichtstrahlen die Lichtstrahlen unter Verwendung eines Streulichtbogens als Lichtquelle (9) auf das Werkstück (6) abgegeben werden, welcher Streulichtbogen eine zu der Form der gekrümmten oder polygonal ausgeformten Oberfläche (7) ähnliche Form aufweist,
wobei der Streulichtbogen bei einer konkav gekrümmten Oberfläche eine ähnlich konkav ausgeformte Form und/oder bei einer konvex gekrümmten Oberfläche eine ähnlich konvex ausgeformte Form aufweist,
wobei die am Werkstück (6) reflektierten Lichtstrahlen durch eine Hyperspektralkamera aufgenommen werden und zu einer Aufnahme von transmittierten Lichtstrahlen das Werkstück (6) mit monochromatischen Lichtstrahlen beleuchtet wird und die durch das Werkstück (6) transmittierten Lichtstrahlen mittels einer optischen Kamera (8) aufgenommen werden, und
wobei in einer Zusammenschau der Aufnahmeverfahren die Ergebnisse der einzelnen Verfahren miteinander verglichen werden und ein Grad einer Übereinstimmung berechnet wird.

2. Verfahren nach Anspruch 1, **dadurch gekennzeichnet, dass**
Lichtstrahlen mit weißem Licht von der zumindest einen Lichtquelle (9) zu der Aufnahme von reflektierten Lichtstrahlen abgegeben werden.

3. Verfahren nach einem der Ansprüche 1 bis 2, **dadurch gekennzeichnet, dass**
zur Aufnahme der reflektierten Lichtstrahlen Lichtstrahlen mit einer Wellenlänge eingesetzt werden, bei welcher Wellenlänge die Lichtstrahlen nicht durch das Werkstück (6) transmittiert werden.

4. Verfahren nach einem der Ansprüche 1 bis 3, **dadurch gekennzeichnet, dass**
die Lichtstrahlen in einem Winkel von 30° bis 60° auf die Werkstückoberfläche (7) gerichtet werden.

5. Verfahren nach einem der Ansprüche 1 bis 4 zur Detektion von Diskontinuitäten (1) in einer an der Oberfläche (7) des lichtdurchlässigen Werkstückes (6) aufgebrachten lichtdurchlässigen Lackschicht.

6. Verfahren nach einem der Ansprüche 1 bis 5 zur Detektion von Diskontinuitäten (1) in einer an der Oberfläche (7) des lichtdurchlässigen Werkstückes (6) aufgebrachten Adhäsionsschicht.

7. Verfahren nach einem der Ansprüche 1 bis 5 zur Detektion von Diskontinuitäten (1) in einer an der Oberfläche (7) des lichtdurchlässigen Werkstückes (6) aufgebrachten lichtdurchlässigen Folie.

## Claims

1. A method for non-destructively detecting geometrical discontinuities (1) in a translucent workpiece (6),
which workpiece (6) has a curved and/or polygonal surface (7),
wherein light beams emitted from at least one light source (9) are directed to the workpiece (6), wherein,
to record reflected light beams, the light beams are emitted to the workpiece (6) using a scattered light arc as the light source (9),
which scattered light arc has a shape similar to that of the curved or polygonal surface (7),
wherein, when the curving of the surface is concave, the scattered light arc has a similar concave shape and/or, when the curving of the surface is convex, the scattered light arc has a similar convex shape,
wherein the light beams reflected at the workpiece (6) are recorded by a hyperspectral camera, and, to record transmitted light beams, the workpiece (6) is illuminated with monochromatic light beams and the light beams transmitted through the workpiece (6) are recorded via an optical camera (8), and
wherein, in a synopsis of recording methods, the results of individual methods are compared and a degree of matching is calculated.

2. The method of claim 1, **characterised in that**
light beams of white light are emitted from the at least one light source (9) to the recording of reflected light beams.

3. The method of any one of claims 1 and 2, **characterised in that**,
to record the reflected light beams, light beams are employed at a wavelength at which the light beams are not transmitted through the workpiece (6).

4. The method of any one of claims 1 to 3, **characterised in that**
the light beams are directed to the workpiece surface (7) at an angle of 30° to 60°.

5. The method of any one of claims 1 to 4 for detecting discontinuities (1) in a translucent varnish applied to the surface (7) of the translucent workpiece (6).

6. The method of any one of claims 1 to 5 for detecting discontinuities (1) in an adhesive layer applied to the surface (7) of the translucent workpiece (6).

7. The method of any one of claims 1 to 5 for detecting discontinuities (1) in a translucent sheet applied to the surface (7) of the translucent workpiece (6).

## Revendications

1. Procédé de détection non destructive de discontinuités géométriques (1) dans une pièce de fabrication (6) qui laisse passer la lumière,
ladite pièce de fabrication (6) présentant une surface (7) courbée et/ou de forme polygonale,
dans lequel des rayons de lumière émis par au moins une source de lumière (9) sont dirigés vers la pièce de fabrication (6),
dans lequel
pour une réception de rayons de lumière réfléchis, les rayons de lumière sont émis sur la pièce de fabrication (6) en utilisant un arc électrique de diffusion comme source de lumière (9),
ledit arc de diffusion présentant une forme similaire à la forme de la surface (7) courbée ou de forme polygonale,
ledit arc électrique de diffusion présentant une forme concave similaire dans le cas d'une surface à courbure concave et/ou une forme convexe similaire dans le cas d'une surface à courbure convexe, les rayons de lumière réfléchis par la pièce de fabrication (6) étant enregistrés par une caméra hyper-spectrale et
pour un enregistrement de rayons de lumière transmis, la pièce de fabrication (6) est éclairée avec des rayons de lumière monochromatiques et les rayons de lumière transmis par la pièce de fabrication (6) sont enregistrés au moyen d'une caméra optique (8) et
dans lequel, dans une vue d'ensemble des procédés d'enregistrement, les résultats des procédés individuels sont comparés et un degré de concordance est calculé.

2. Procédé selon la revendication 1, **caractérisé en ce que**
des rayons de lumière blanche sont émis par ladite au moins une source de lumière (9) pour la réception de rayons de lumière réfléchis.

3. Procédé selon l'une des revendications 1 à 2, **caractérisé en ce que**
pour la réception des rayons de lumière réfléchis, on utilise des rayons de lumière ayant une telle longueur d'onde que les rayons de lumière ayant cette longuer d'onde ne sont pas transmis à travers la pièce de fabrication (6).

4. Procédé selon l'une des revendications 1 à 3, **caractérisé en ce que**
les rayons de lumière sont dirigés vers la surface (7) de la pièce de fabrication selon un angle de 30° à 60°.

5. Procédé selon l'une des revendications 1 à 4 pour la détection de discontinuités (1) dans une couche de peinture translucide déposée sur la surface (7) de la pièce de fabrication (6) qui laisse passer la lumière.

6. Procédé selon l'une des revendications 1 à 5 pour la détection de discontinuités (1) dans une couche adhésive déposée sur la surface (7) de la pièce de fabrication (6) qui laisse passer la lumière.

7. Procédé selon l'une des revendications 1 à 5 pour la détection de discontinuités (1) dans une feuille translucide déposée sur la surface (7) de la pièce de fabrication (6) qui laisse passer la lumière.
